# EUROPEAN PATENT APPLICATION

(11) **EP 2 177 972 A2**
(43) Date of publication of application: **21.04.2010**
(21) Application number: 09172768.5
(22) Date of filing: 12.10.2009
(51) Int. Cl.: G06F 3/041, G06F 3/045

(54) **Touch screen panel and fabrication method thereof**

(30) Priority: 14.10.2008 KR 20080100632
(71) Applicant: Samsung Electronics Co., Ltd., Suwon-si, Gyeonggi-do (KR)
(72) Inventor: Park, Jae-Yong, Suwon-si, Gyeonggi-do (KR); Ji, Young-Bae, Suwon-si, Gyeonggi-do (KR)
(74) Representative: Ketelaars, Maarten F.J.M.

(57) **Abstract**

A touch screen panel includes a window having one curved surface and mounted on a front surface of a display element. A touch screen element is attached to the curved surface of the window, wherein the touch screen element is processed to have a curvature corresponding to a curvature of the curved surface of the window prior to being attached to the curved surface of the window. The touch screen panel operates in a resistive scheme and can be mounted on the window shaped like a curve. The invention makes it possible to manufacture the information device having various designs in accordance with consumer demands yet retaining a low cost.

## Description

### BACKGROUND OF THE INVENTION

### 1. Field of the Invention

The present invention relates to a display device, and more particularly to a touch screen panel that is mounted on a display device so as to provide an input function.

### 2. Description of the Related Art

Conventionally, information apparatuses (devices), such as a cellular phones, navigation apparatuses for vehicles, and a portable multimedia reproducing devices, are output devices that typically include a speakerphone and a display device. Further, such information apparatuses are input devices for voice calls, permitting character input, retrieving stored information, or the like, and include a microphone, keypad, touchscreen or the like to enable such functionality.

In more recent times, as the portability of the information apparatuses was emphasized by manufacturers in response to consumer demand, the apparatuses have become more and more compact, even as functionality has increased. However, as the multimedia function became more widespread, the need for a relatively large screen that is still portable and enables the user to watch a moving image or a TV broadcasting program has been at the forefront of consumer demand. Such trends have facilitated the employment of a display device having a touch screen panel, instead of a button-type keypad, in manufacturing the information apparatus to reduce size and weight of the apparatus and to permit a larger screen for viewing.

Typically, a touch screen panel generally uses a resistive touch screen element, or a capacitive touch screen element.

The resistive touch screen element is an element sensing an input location through a resistance value that is changed according to the press power of the user, and has an advantage in that its structure and usage method is simple, represents a transmittance rate of a minimum of approximately 80%, and its cost of manufacturer is relatively cheap. However, there is a disadvantage in that the resistive touch screen element does not have sufficient durability, is thick, and is not suitable for a relatively large screen.

The capacitive touch screen element is an element that operates by sensing an input location through the capacity that is changed by the electrostatic generated when the human body is in contact with the element, and has an advantage in that the durability, assembly property, and thickness are superior to that of the resistive touch screen element. However, there is a disadvantage in that the capacitive touch screen element requires an additional control system and its circuit is complex.

Taking the advantages, disadvantages, and portability of the above two-types of touch screen elements into the consideration, the resistive touch screen element is still relatively widely used in manufacturing an information device.

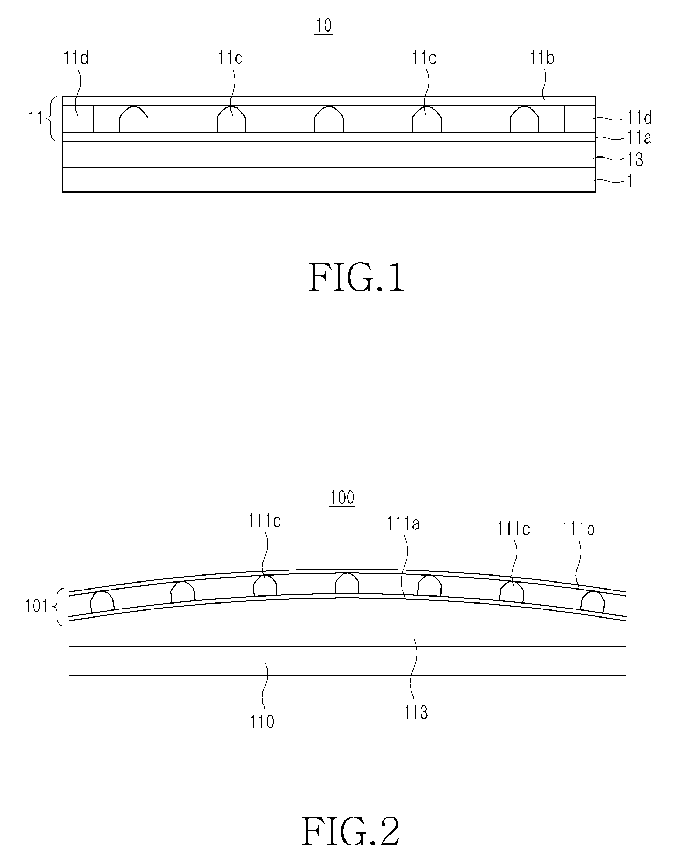

FIG. 1 illustrates a conventional display device 10 including a general resistive touch screen panel. The display device 10 includes a display element 1, such as a liquid display element, and a window 13 protecting the display element 1. The touch screen panel includes the window 13 and a touch screen element 11 attached to an exterior-side surface of the window 13. The touch screen element 11 is the resistive touch screen element and includes an Indium-Tin Oxide Film(ITO film) 11a attached to the window 13 and another ITO film 11b directly being in contact with the user's finger. A plurality of dot spacers 11c are disposed between the ITO films 11 a and 11b so as to maintain an interval between the ITO films 11a and 11b. The ITO films 11a and 11b are attached with each other by an double-sided adhesive tape 11d disposed along the edges of the ITO films 11a and 11b.

The invisible circuit patterns are printed on the ITO films 11a and 11b, respectively so as to sense the change of the resistance value, or the like, generated by the operation of the user and transmit it to a circuit unit of the information apparatus.

The conventional resistive touch screen element directly senses the press power of the user so that, as discussed previously, the element should be mounted on an exterior surface of the apparatus, i.e. the display device, and it is difficult to have a curved surface. As a result, the resistive touch screen element has an advantage of easiness of the manufacture and low cost, but simultaneously has an disadvantage of difficulty of being formed in a curved surface, so as to cause a problem in diversifying the appearance of the information device.

### SUMMARY OF THE INVENTION

Accordingly, the present invention has been made to provide a touch screen panel and a manufacturing method thereof which can diversify the appearance of the information apparatus.

In accordance with an exemplary aspect of the present invention, there is provided a touch screen panel, including: a window having a curved surface and mounted on a front surface of a display element; and a touch screen element attached to the curved surface of the window, wherein the touch screen element is processed to have a curvature corresponding to a curvature of the curved surface of the window prior to being attached to the curved surface of the window.

The touch screen element includes a pair of Indium-Tin Oxide films(ITO films) and a plurality of dot spacers disposed between the ITO films.

Furthermore, the touch screen element preferably is processed to have the curvature in a state where the dot spacers are disposed between the ITO films, and the ITO films are manufactured to have the curvature, respectively, and then are assembled as the touch screen element. The ITO films are then attached with each other by an double-sided adhesive tape arranged along edges of the ITO films.

Preferably, the touch screen element comprises a resistive touch screen.

In accordance with another exemplary aspect of the present invention, there is provided a method of manufacturing a touch screen panel, including the steps of: manufacturing a window that has a curved surface; manufacturing a touch screen element having a curvature corresponding to a curvature of the curved surface of the window; and attaching the manufactured touch screen element to the window.

The manufacturing of the touch screen element preferably includes the steps of: preparing a pair of ITO films; and attaching the ITO films to each other so that a plurality of dot spacers are disposed between the ITO films.

The method according to the present invention further includes a step of processing the ITO films to have a curvature corresponding to a curvature of the curved surface of the window prior to disposing the dot spacers between the ITO films, and attaching the ITO films to each other so the dot spacers are disposed between the ITO films, and then processing the touch screen element to have a curvature corresponding to the curvature of the curved surface of the window.

Preferably, the step of manufacturing the touch screen element is manufactured as a resistive touch screen element.

According to an exemplary aspect of the present invention, the touch screen panel including the touch screen element is operated in a resistive scheme and also can be mounted on the curved window, so as to facilitate making the appearance of the information device to have diverse designs. Further, the touch screen panel preferably is manufactured using the resistive touch screen element, rather than using the capacitive touch screen element, so as to advantageously save the manufacturing cost of the information device and provide the user with a cost-effective information device.

### BRIEF DESCRIPTION OF THE DRAWINGS

The above and other exemplary aspects, features and advantages of the present invention will be more apparent from the following detailed description taken in conjunction with the accompanying drawings, in which:
FIG. 1 is a sectional view illustrating the construction of a display device having a touch screen panel according to the prior art;
FIG. 2 is a sectional view illustrating the construction of a display device having a touch screen panel according to an exemplary embodiment of the present invention;
FIGs. 3A to 3C are the diagrams sequentially illustrating a process of manufacturing the touch screen panel of FIG. 2;
FIGs. 4A to 4D are the diagrams sequentially illustrating another process of manufacturing the touch screen panel of FIG. 2.

### DETAILED DESCRIPTION

Hereinafter, exemplary embodiments of the present invention will be described with reference to the accompanying drawings. In the following description, detailed explanation of known related functions and constitutions may be omitted to avoid unnecessarily obscuring appreciation of the subject matter of the present invention by a person of ordinary skill in the art.

FIG. 2 is a sectional view illustrating the construction of a display device 100 having a touch screen panel according to an exemplary embodiment of the present invention. As shown in FIG. 2, the display device 100 preferably includes a display element 110 and a window 113 for protecting the display element 110. The touch screen panel includes the window 113 and a touch screen element 101 attached to an exterior-side surface of the window 113. The window 113 has one surface being curve-shaped and may be substantially transparent or translucent. If the window 113 is mounted on the display element 110, the curved part of the window 113 is placed in the exterior surface of the display device 100. The touch screen element 101 is the resistive touch screen element in which a plurality of dot spacers 111c are interposed between the ITO films 111a and 111b, a pair of ITO films 111a and 11b are attached to each other via the plurality of spacers.

A double-sided adhesive tape (not shown) can be disposed along the edges of the ITO films 111a and 11b for attaching the ITO films 111a and 111b to each other. The dot spacers 111c uniformly maintain an interval between the ITO films 111a and 111b. That is, the double-sided adhesive tape attaches the ITO films 111a and 111b to each other and is arranged around the dot spacers 111c.

The touch screen element 101 preferably is manufactured in a shape having a curvature corresponding to the curved surface of the window 113 and is attached to the curved surface of the window 113. Accordingly, the display device 110 includes the resistive touch screen panel.

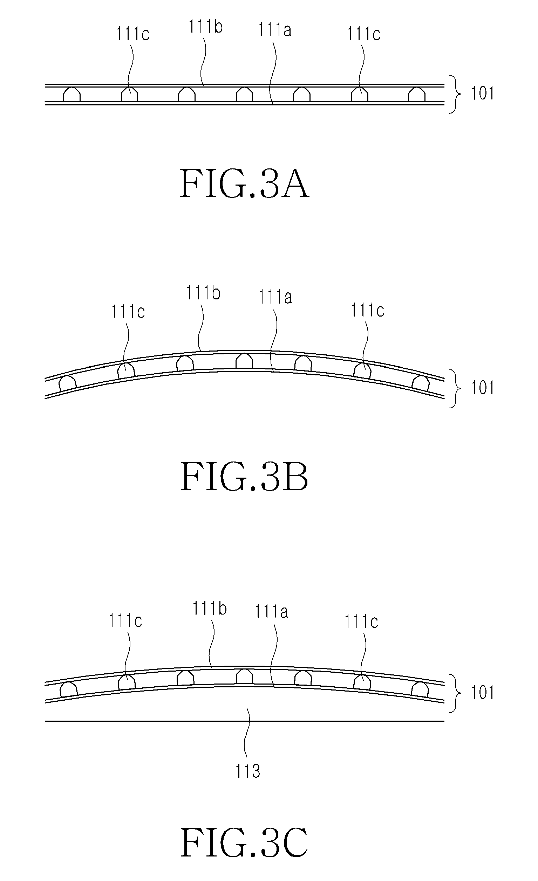

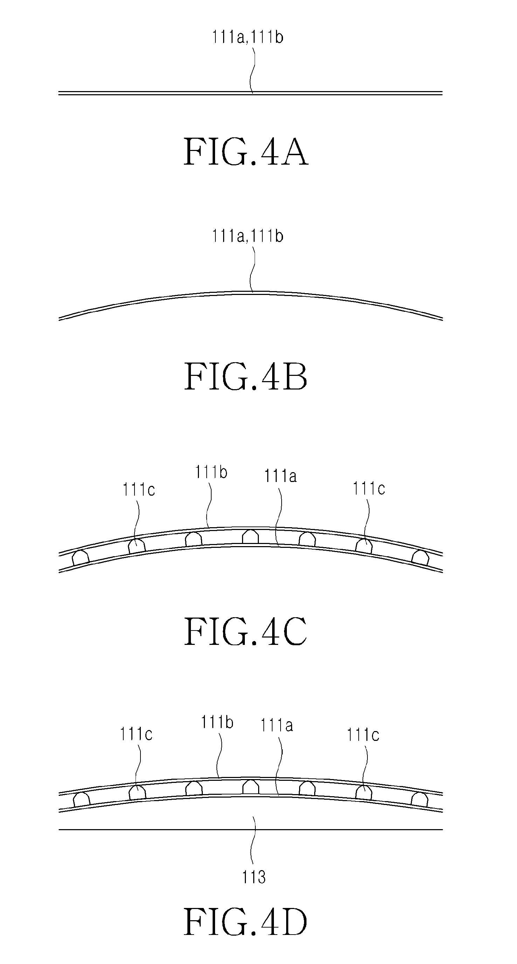

FIGs. 3A to 3C and 4A to 4D illustrate an exemplary process of attaching the touch screen element 101 to the window 113, respectively. The touch screen element 101 can be initially manufactured in a shape of a flat panel and then is shaped to have a curvature corresponding to the curved surface of the window 113, or is formed to have a curvature itself.

FIGs. 3A to 3C sequentially illustrate the exemplary process in which the touch screen element 101 is manufactured in a shape of a flat panel, is processed to have the curvature, and is attached to the window 113. The window 113 and the touch screen element 101 are separately manufactured and the window 113 can have various shapes of the curved surface according to the appearance design of the to-be-manufactured information apparatus.

In the touch screen element 101, the dot spacers 111c are disposed between the ITO films 111a and 111b. The touch screen element 101 is preferably first manufactured in a shape of a flat panel (shown in FIG. 3A), and then is processed (shown in FIG. 3B) into a shape having a curvature corresponding to the curved surface of the window 113. The touch screen element 101 that is processed in a curved surface is attached (shown in FIG. 3C) to the curved surface of the window 113 so as to complete assembly of the touch screen panel.

There can be a process step of printing a protection film or a circuit pattern on the ITO films 111a and 111b, respectively, prior to attaching the ITO films 111a and 111b with each other, but which is understood by an artisan through the manufacturing method of the flat-type touch screen device, so that its detailed description will be omitted herein.

FIGs. 4A to 4D sequentially illustrate the process in which the touch screen element 101 is manufactured in a curved shape and then is attached to the window 113. The exemplary process shown in FIGs. 4A to 4D also includes a process of printing a protection film or a circuit pattern on the ITO films 111a and 111b, respectively, prior to attaching the ITO films 111a and 111b with each other, but which is understood by an artisan familiar with the manufacturing method of the flat-type touch screen device, so that its detailed description will be omitted.

The ITO films 111a and 111b are cut (shown in FIG. 4A) in a size corresponding to that of the window 113 from a plane shape, and is processed (shown in FIG. 4B) to have a curvature corresponding to the curved surface of the window 113. At this time, the ITO films 111a and 111b can be processed in the shape of the curved surface by using the molding, or the like.

The dot spacers 111c are preferably printed on either one of the ITO films 111a and 111b formed in the shape of the curved surface and the ITO films 111a and 111b are attached with each other while the dot spacers 111c are disposed between the ITO films 11a and 111b, so as to complete (shown in FIG. 4C) the touch screen element 101. As shown in FIG. 4D, the completed touch screen element 101 is attached to the curved surface of the window so as to complete the assembly of the touch screen panel.

In manufacturing the touch screen panel, the degree of curvature of the curved surface of the window 113 can be variably set according to the appearance of the informational device that is to being manufactured.

While the present invention has been shown and described with reference to certain exemplary embodiments and drawings thereof, it will be understood by those skilled in the art that various changes in form and details may be made therein without departing from the spirit and scope of the invention as defined by the appended claims. For example, while the examples show a window with one curved surface is in within the spirit and scope of the invention that there could be more than one curved surface.

## Claims

1. A touch screen panel (100), comprising:
a display element;
a window (113) having a first curved surface and mounted on a front surface of the display element (110); and
a touch screen element (101) attached to the window (113), wherein the touch screen element (101) is processed to have a curvature corresponding to a curvature of the curved surface of the window (113) prior to being attached to the curved surface of the window (113).

2. The touch screen panel (100) as claimed in claim 1, **characterized in that** the touch screen element (101) is attached to the curved surface of said window (113).

3. The touch screen panel (100) as claimed in claim 1, **characterized in that** the touch screen element (101) comprises:
a pair of Indium-Tin Oxide films (ITO films) (111a, 111b) arranged so that a first film of said pair of ITO films is disposed on a second film of said pair of ITO films; and
a plurality of dot spacers (111c) arranged between the pair of ITO films (111a, 111b).

4. The touch screen panel (100) as claimed in claim 3, **characterized in that** the touch screen element (101) is processed to have a curvature where the dot spacers (111c) are disposed between the ITO films (111a, 111b).

5. The touch screen panel (100) as claimed in claim 3, **characterized in that** the ITO films (111a, 111b) are manufactured with a curvature, respectively, for assembly as the touch screen element (101) having a curved surface.

6. The touch screen panel (100) as claimed in claim 3, **characterized in that** the ITO films (111a, 111b) are fastened by a double-sided adhesive tape arranged along edges of the ITO films (111a, 111b), respectively.

7. The touch screen panel (100) as claimed in any one of claims 1 to 6, **characterized in that** the touch screen element (101) comprises a resistive touch screen.

8. A method of manufacturing a touch screen panel (100), comprising the steps of:
providing a window (113) having a curved surface;
providing a touch screen element (101) having a curvature corresponding to a curvature of the curved surface of the window(113); and
attaching the touch screen element to the window (113).

9. The method as claimed in claim 8, **characterized in that** the manufacturing the touch screen element comprises the steps of:
preparing a pair of ITO films (111a, 111b); and
attaching the ITO films (111a, 111b)to each other where a plurality of dot spacers (111c) are arranged between the ITO films (111a, 111b).

10. The method as claimed in claim 9, further comprising a step of processing the ITO films (111a, 111b) to have a curvature corresponding to a curvature of the curved surface of the window (113) prior to arranging the dot spacers (111c)between the ITO films (111a, 111b).

11. The method as claimed in claim 9, further comprising a step of attaching the ITO films to each other where the plurality of dot spacers (111c) are arranged between the ITO films (111a, 111b) and then processing the touch screen element (101) to have a curvature corresponding to the curvature of the curved surface of the window (113).

12. The method as claimed in any one claim of claims 8 to 11, **characterized in that** the touch screen element (101) comprises a resistive touch screen element.
